# EUROPÄISCHE PATENTSCHRIFT

(11) **EP 1 184 226 B1**
(45) Veröffentlichungstag und Bekanntmachung des Hinweises auf die Patenterteilung: **09.11.2005**
(21) Anmeldenummer: 01119024.6
(22) Anmeldetag: 07.08.2001
(51) Int. Cl.: B60R 16/02, B60R 11/02, H04L 12/40

(54) **Modulare Anordnung elektrischer Subsysteme in Fahrzeugen**
Modular arrangement of electrical subsystems in vehicles
Agencement modulaire de sous-systèmes électroniques dans les véhicules

(30) Priorität: 29.08.2000 DE 10042377
(43) Veröffentlichungstag der Anmeldung: 06.03.2002
(73) Patentinhaber: ROBERT BOSCH GMBH, 70442 Stuttgart (DE)
(72) Erfinder: Westendorf, Andreas, 31137 Hildesheim (DE); Baierl, Wolfgang, 73630 Remshalden (DE)

(56) Entgegenhaltungen:
- DE-A- 10 000 336
- DE-A- 10 008 454
- DE-A- 19 625 002
- DE-A- 19 949 264

## Beschreibung

### Stand der Technik

Die Erfindung betrifft ein Fahrzeug, insbesondere Kraftfahrzeug mit einer modularen Anordnung elektronischer Subsysteme.

Zur Zeit existieren verschiedene Ansätze zur Partitionierung von Hochgeschwindigkeitsdatenbussen in Kraftfahrzeugen. Diese Ansätze beinhalten verteilte Systeme, Einzelgeräte und modulare Subsysteme.

In bekannten Ansätzen kommunizieren die Module untereinander über Datenbusse. Daher sind diese Ausführungen nicht für eine modulare Integration im Kraftfahrzeug tauglich.

Unter gewissen Randbedingungen besitzen modulare Systeme Kostenvorteile. Praxisgerechte Ausführungen modularer Systeme im Kraftfahrzeug existieren allerdings bis heute nicht.

Ein Fahrzeug mit einer modularen Anordnung elektronischer Subsysteme nach dem Oberbegriff des Anspruchs 1 ist aus der DE 100 00 336 A bekannt.

### Aufgabe und Vorteile der Erfindung

Es ist Aufgabe der Erfindung, eine für die Integration im Kraftfahrzeug taugliche modulare Anordnung elektronischer Subsysteme anzugeben, die eine flexible und Kompatibilitätsbedingungen von Subsystemen mehrerer Hersteller/Lieferanten einbeziehende Anordnung unterschiedlicher elektronischer Subsysteme ermöglicht.

Diese Aufgabe wird mit dem Fahrzeug nach Anspruch 1 gelöst, wobei vorgeschlagen wird, Module der elektronischen Subsysteme unter Einhaltung eines allen Modulen gemeinsamen Standards im Fahrzeug in einem zur Aufnahme der Module konstruierten Modulträger zu integrieren, der so eingerichtet ist, daß er je nach seiner Ausführung, Größe und Ausbaustufe unterschiedlich viele und verschiedene Module aufnehmen kann, die Verbindung zwischen dem Modulträger und den Modulen durch ein gezielt partitioniertes Stecksystem herzustellen und den Modulträger und das Stecksystem so einzurichten, dass sie wenigstens folgende Subsysteme aufnehmen können:
- eine Hauptstromversorgung zur Erzeugung von Hauptstromversorgungsspannung mit Anschluß an das Fahrzeugbordnetz,
- wenigstens ein Hauptschnittstellmodul zur Herstellung von Schnittstellen zu vorhandenen Fahrzeugsystemen.
Eine derart ausgeführte modulare Anordnung erzielt eine Kraftfahrzeug-praxistaugliche Realisierung eines Modulsystems und eignet sich darüber hinaus für die Durchsetzung als Standard für Modulsysteme im Kraftfahrzeug.

Durch die in den Unteransprüchen aufgeführten Maßnahmen sind vorteilhafte Weiterbildungen und Verbesserungen der im Hauptanspruch angegebenen modularen Anordnung möglich. Besonders vorteilhaft ist, eine Zusatzstromversorgung zur Erzeugung zusätzlicher Spannungen einer Steckkarte vorzusehen und in den Modulträger einzustecken. Hierdurch wird ermöglicht, für spezielle Anwendungen, insbesondere für Niederspannungsanwendungen im Fahrzeug eine geeignete Betriebsspannung zur Verfügung stellt, die vorzugsweise niedriger als die Spannung einer übrigen bordeigenen Stromversorgung ist.

Weiterhin ist vorteilhaft, ein Zusatznetzwerkmodul anzubringen, mit dem Datenaustausch mit einem weiteren fahrzeugeigenen Bussystem, z.B. einem Multimediabussystem, das vorzugsweise als ein optischer Bus ausgeführt ist, erstellt werden kann. Weiterhin ist vorteilhaft, wenigstens ein Modul mit oder für die internen Verbindungen zu Kommunikationsschnittstellen zur Verfügung zu stellen. Die internen Kommunikationsschnittstellen dienen z.B. dem internen Powermanagement, der Synchronisation oder der Übertragung von Statusmeldungen.

Eine Ausführungsform kann so eingerichtet sein, daß das gezielt partionierte Stecksystem eine leicht lösbare Steckverbindung zwischen Modulen und Modulträger herstellt.

Dabei kann auch vorgesehen sein, daß bestimmte Module mit festen Funktionen fest oder feststellbar im Modulträger enthalten sind.

Der Modulträger kann so eingerichtet sein, daß ein oft optional vorgesehenes Zusatzstromversorgungsmodul einsteckbar ist, um aus einer vom Hauptstromversorgungsmodul abgegebenen Spannung Zusatzspannungen zu erzeugen, z.B. 5 V und 3,3 V, und um diese Zusatzspannungen über das Stecksystem an andere Module zu verteilen.

Weiterhin können der Modulträger und das Stecksystem so eingerichtet sein, daß optional ein Zusatznetzwerkmodul eingesteckt werden kann, um MOST-Signale auf Ethernet umzuwandeln und diese Ethernetsignale über das Stecksystem an andere Module zu verteilen.

Ferner können der Modulträger und das Stecksystem dafür eingerichtet sein, ein optionales internes Kommunikationsschnittstellenmodul aufzunehmen, um Funktionen für internes Powermanagement, eines Synchronisation bestimmter Signale und die Erzeugung bzw. Übertragung von Statusmeldungen und Nutzdaten zu ermöglichen.

Dabei sind das Zusatzstromversorgungsmodul, das Zusatznetzwerkmodul und das interne Kommunikationsschnittstellenmodul eingangsseitig nur mit kompatiblen Gebermodulen betreibbar, wobei inkompatible Gebermodule auf anderen Teilen oder Plätzen des Stecksystems betrieben werden.

Mit den obigen und weiteren anhand der nachfolgenden Beschreibung beschriebenen Merkmalen ermöglicht die Erfindung eine für den praktischen Einsatz im Kraftfahrzeug taugliche und vorteilhafte modulare Anordnung elektronischer Subsysteme, die in Herstellung, Installation und Wartung Kostenvorteile bietet. Ferner gibt die erfindungsgemäße Anordnung eine Basis für die Standardisierung allgemeiner modularer Systeme im Kraftfahrzeug.

### Zeichnung

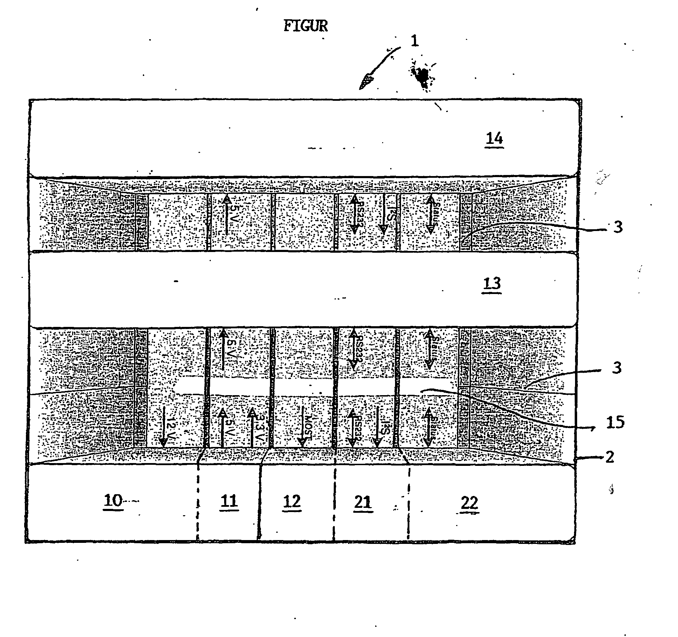

Nachstehend wird ein Ausführungsbeispiel für eine modulare Anordnung elektronischer Subsysteme in einem Kraftfahrzeug bezogen auf die einzige Zeichnungsfigur beschrieben.

### Ausführungsbeispiel

In dem in der Figur perspektivisch und schematisch dargestellten boxförmigen Modulträger 1, der ein in einem äußeren Gehäuse 2 integriertes Gestell 3 aufweist, sind folgende Module eingeschoben und in das gezielt partitionierte Stecksystem 15 eingesteckt:
- ein Hauptstromversorgungsmodul 10, das zur Erzeugung einer Hauptstromversorgungsspannung an ein Bordnetz, z.B. ein 12V-Bordnetz angeschlossen ist;
- ein Zusatzstromversorgungsmodul 11, das aus der vom Hauptstromversorgungsmodul 10 erzeugten Spannung zusätzliche Spannungen 5 V und 3,3 V erzeugt, die weiteren Subsystemmodulen über das Stecksystem 15 im Modulträger 1 zugeführt werden;
- ein Hauptnetzwerkschnittstellenmodul 12, welches ein Interface zu einem oder mehreren vorhandenen Fahrzeugbussen, z.B. zu einem MOST-Bus bildet;
- ein Zusatznetzwerkmodul 21, das MOST-Signale auf Ehternetsignale umwandelt und diese über das Stecksystem 15 an andere Module des Modulträger 1 verteilt; (In dem in der Figur dargestellten Beispiel empfängt das Zusatznetzwerkmodul 21 I²s-Signale und bildet eine Schnittstelle für RS232-Signale);
- ein internes Kommunikationsschnittstellenmodul 22, welches Funktionen für ein internes Powermanagement, Signalsynchronisation und zur Erzeugung und Verteilung von Statusmeldungen über das Stecksystem 15 des Modulträgers 1 an andere Module aufweist.

Selbstverständlich können das Hauptstromversorgungsmodul 10 und das Zusatzstromversorgungsmodul 11 zu einem gemeinsamen Netzteil vereint sein.

Ferner enthält der Modulträger 1 der erfindungsgemäßen modularen Anordnung als Beispiel ein GPS-Modul 13 und ein FM-Tunermodul 14.

Es ist zu erwähnen, daß die Hauptmodule 10 und 12 für die Funktionen der modularen Anordnung grundlegend und unverzichtbar sind, deshalb diesen Modulen insgesamt die Spannungen des Bordnetzes und die Fahrzeugbussyseme zur Verfügung stehen und daß diese Hauptmodule 10, 12 prinzipiell auf fest in den Modulträger 1 eingebaut sein können. Die optionell vorgesehenen Zusatzmodule 11, 21, 22 können nur mit kompatiblen Gebermodulen betrieben werden, die in kompatibler Weise die für ihre Eingänge benötigten Spannungen bzw. Singale zuführen. Inkompatible Gebermodule müssen auf unterschiedlichen Teilen des Stecksystems 15 betrieben werden.

In dem in der Figur dargestellten Ausführungsbeispiel besteht der Modulträger aus einer quaderförmigen Modulbox. Dies ist jedoch nur beispielhaft. Der Modulträger 1 kann auch eine von der Quaderform abweichende zu einer Integration an geeigneter Stelle im Kraftfahrzeug gestaltete Form haben.

Das zur steckbaren Aufnahme der verschiedenen Subsystemmodule im Modulträger 1 konzipierte gezielt partitionierte Stecksystem kann an bestimmten Steck- oder Einbauplätzen, dort wo dies angebracht ist, auch für bestimmte Funktionen oder Spannungspegel programmierte Steckerbelegungen aufweisen.

Die oben beschriebene und der Figur als Ausführungsbeispiel dargestellte erfindungsgemäße modulare Anordnung elektronischer Subsysteme vereint den Vorteil der Modularität mit dem Vorteil der Kompatibilität von Subsystemen mehrerer Lieferanten.

Weiterhin ist der Vorteil der gemeinsamen Stromversorgung kombiniert mit den Vorteilen eines Powermanagements erzielt.

Zudem ist der Vorteil eines gemeinsamen Businterface mit dem Vorteil einer Busanbindung an einen Hochgeschwindigkeitsdatenbus kombiniert.

## Patentansprüche

1. Fahrzeug, insbesondere Kraftfahrzeug, mit einer modularen Anordnung elektronischer Subsysteme wobei Module der elektronischen Subsysteme unter Einhaltung eines allen Modulen gemeinsamen Standards im Fahrzeug integriert sind,
ein zur Aufnahme aller Module vorgesehener Modulträger (1) so eingerichtet ist, daß er jene Ausführung, Größe und
Ausbaustufe der Subsysteme unterschiedlich viele verschiedene Module aufnehmen kann,
die Verbindung zwischen dem Modulträger (1) und den Modulen durch ein gezielt partitioniertes Stecksystem (15) hergestellt ist, **dadurch gekennzeichnet, daß**
das Stecksystem (15) zur Aufnahme wenigstens folgender Subsystemmodule eingerichtet ist:
- eines Hauptstromversorgungsmoduls (10) zur Erzeugung von Hauptstromversorgungsspannungen mit Anschluß an ein fahrzeugeigenes Bordstromversorgungsnetz,
- wenigstens eines Hauptschnittstellenmoduls zur Verbindung mit einem Hauptnetzwerk eines vorhandenen Fahrzeugbussystems.

2. Fahrzeug nach Anspruch 1, **dadurch gekennzeichnet, daß** das Stecksystem (15) zur Aufnahme einer Zusatzstromversorgung (11) zur Erzeugung zusätzlicher Spannungen eingerichtet ist.

3. Fahrzeug nach Anspruch 2, **dadurch gekennzeichnet, daß** ein Zusatzstromversorgungsmodul (11) aus einer vom Hauptstromversorgungsmodul (10) abgegebenen Spannungen Zusatzspannungen (5 V; 3,3 V) erzeugt und diese über das Stecksystem (15) an andere Module verteilt.

4. Fahrzeug nach einem der vorhergehenden Ansprüche, **dadurch gekennzeichnet, daß** das Stecksystem (15) zur Aufnahme wenigstens eines Zusatznetzwerkmoduls eingerichtet ist.

5. Fahrzeug nach Anspruch 4, **dadurch gekennzeichnet, daß** ein Zusatznetzwerkmodul MOST-Signale auf einen Datenbus umwandelt und die Datenbussignale über das Stecksystem (15) an andere Module verteilt.

6. Fahrzeug nach einem der vorhergehenden Ansprüche, **dadurch gekennzeichnet, daß** das Stecksystem (15) zur Aufnahme wenigstens eines Moduls für eine interne Kommunikationsschnittstelle eingerichtet ist.

7. Fahrzeug nach Anspruch 6, **dadurch gekennzeichnet, daß** ein internes Kommunikationsschnittstellenmodul Funktionen für internes Powermanagement, Synchronisation bestimmter Signale und zur Erzeugung und Verteilung von Statusmeldungen und Nutzdaten aufweist.

8. Fahrzeug nach einem der Ansprüche 2-7, **dadurch gekennzeichnet, daß** das Zusatzstromversorgungsmodul (11), das Zusatznetzwerkmodul und/oder das interne Kommunikationsschnittstellenmodul eingangsseitig nur mit kompatiblen Gebermodulen, wie dem Hauptstromversorgungsmodul (10), oder dem Hauptnetzwerkschnittstellenmodul (12) betreibbar sind und daß inkompatible Gebermodule jeweils auf anderen Teilen oder Plätzen des Stecksystems (15) als die kompatiblen Gebermodule betrieben werden.

9. Fahrzeug nach einem der vorhergehenden Ansprüche, **dadurch gekennzeichnet, daß** das Stecksystem (15) eine leichte lösbare Steckverbindung zwischen Modulen und dem Modulträger herstellt.

10. Fahrzeug nach einem der vorhergehenden Ansprüche, **dadurch gekennzeichnet, daß** bestimmte Subsystemmodule mit festgelegten Funktionen fest oder feststellbar im Modulträger (1) enthalten sind.

11. Fahrzeug nach einem der vorhergehenden Ansprüche, **dadurch gekennzeichnet, daß** der Modulträger (1) kastenförmig ist.

12. Fahrzeug nach einem der vorhergehenden Ansprüche, **dadurch gekennzeichnet, daß** der Modulträger (1) ein in einem kastemförmigen äußeren Gehäuse (2) integriertes Gestell aufweist.

13. Fahrzeug nach einem der vorhergehenden Ansprüche, **dadurch gekennzeichnet, daß** das Stecksystem (15) im Modulträger (1) weiterhin zur Aufnahme und zum Betrieb eines GPS-Moduls (13) eingerichtet ist.

14. Fahrzeug nach einem der vorhergehenden Ansprüche, **dadurch gekennzeichnet, daß** das Stecksystem (15) im Modulträger (1) weiterhin zur Aufnahme und zum Betrieb eines FM-Tunermoduls eingerichtet ist.

## Claims

1. Vehicle, in particular a motor vehicle having a modular arrangement of electronic subsystems, wherein modules of the electronic subsystems are integrated into the vehicle while complying with a standard which is common to all the modules, a module carrier (1) which is provided for receiving all the modules is set up in such a way that each design, size and upgrade level of the subsystems can receive a different number of various modules, the connection between the module carrier (1) and the modules is formed by a plug-in system (15) which is partitioned in a selective fashion, **characterized in that** the plug-in system (15) is configured to receive at least the following subsystem modules:
- a main power supply module (10) for generating main power supply voltages with connection to a vehicle-specific on-board power supply system,
- at least one main interface module for connection to a main network of an existing vehicle bus system.

2. Vehicle according to Claim 1, **characterized in that** the plug-in system (15) is configured to receive an additional power supply (11) for generating additional voltages.

3. Vehicle according to Claim 2, **characterized in that** an additional power supply module (11) generates additional voltages (5 V; 3.3 V) which are output by the main power supply module (10) and distributes them to other modules by means of the plug-in system (15).

4. Vehicle according to one of the preceding claims, **characterized in that** the plug-in system (15) is configured to receive at least one additional power system module.

5. Vehicle according to Claim 4, **characterized in that** an additional power system module converts MOST signals onto a databus and distributes the databus signals to other modules by means of the plug-in system (15).

6. Vehicle according to one of the preceding claims, **characterized in that** the plug-in system (15) is configured to receive at least one module for an internal communications interface.

7. Vehicle according to Claim 6, **characterized in that** an internal communications interface module has functions for internal power management, synchronization of specific signals and for generating and distributing status messages and useful data.

8. Vehicle according to one of Claims 2 to 7, **characterized in that** the additional power supply module (11), the additional power system module and/or the internal communications interface module can be operated at the input end only with compatible signal transmitter modules such as the main power supply module (10) or the main power system interface module (12), and **in that** incompatible signal transmitter modules are each operated on other parts or at other locations in the plug-in system (15) than the compatible signal transmitter modules.

9. Vehicle according to one of the preceding claims, **characterized in that** the plug-in system (15) brings about an easily releasable plug-in connection between the modules and the module carrier.

10. Vehicle according to one of the preceding claims, **characterized in that** specific subsystems with fixed functions are contained in the module carrier (1) in a defined or definable fashion.

11. Vehicle according to one of the preceding claims, **characterized in that** the module carrier (1) is box-shaped.

12. Vehicle according to one of the preceding claims, **characterized in that** the module carrier (1) has a frame which is integrated into a box-shaped external housing (2).

13. Vehicle according to one of the preceding claims, **characterized in that** the plug-in system (15) in the module carrier (1) is also configured to.receive and to operate a GPS module (13).

14. Vehicle according to one of the preceding claims, **characterized in that** the plug-in system (15) in the module carrier (1) is also configured to receive and to operate a FM tuner module.

## Revendications

1. Véhicule, en particulier véhicule automobile comportant un agencement modulaire de sous-systèmes électroniques dans lesquels :
- des modules de sous-systèmes électroniques sont intégrés au véhicule, avec conservation d'un standard commun pour tous les modules,
- un support de module (1) prévu pour accueillir tous les modules est conçu de manière à pouvoir accueillir différemment toutes formes, grandeurs et niveaux de développement des modules des sous-systèmes constitués de plusieurs modules différents,
- la liaison entre le support de module (1) et les modules est réalisée par un système enfichable (15) segmenté de manière voulue,
**caractérisé en ce que**
- le système enfichable (15) est conçu pour accueillir au moins les modules suivants des sous-systèmes :
- un module (10) d'alimentation en courant principal, pour fournir des tensions d'alimentation en courant principal par raccordement au réseau d'alimentation de bord propre au véhicule,
- au moins un module d'interface principal pour relier un système de bus existant dans le véhicule à un réseau principal.

2. Véhicule selon la revendication 1,
**caractérisé en ce que**
le système enfichable (15) est conçu pour accueillir une alimentation (11) en courant auxiliaire (11) pour obtenir des tensions supplémentaires.

3. Véhicule selon la revendication 2,
**caractérisé en ce que**
des tensions auxiliaires (5 V ; 3,3 V) sont obtenues à partir des tensions délivrées par le module d'alimentation en courant principal (10) et ces tensions sont distribuées à d'autres modules par le système enfichable (15).

4. Véhicule selon une des revendications précédentes,
**caractérisé en ce que**
le système enfichable (15) est conçu pour accueillir au moins un module de réseau auxiliaire.

5. Véhicule selon la revendication 4,
**caractérisé en ce qu'**
un module de réseau auxiliaire convertit des signaux MOST sur un bus de données et les signaux de ce bus sont distribués par le système enfichable (15) à d'autre modules.

6. Véhicule selon une des revendications précédentes,
**caractérisé en ce que**
le système enfichable (15) est conçu pour accueillir au moins un module pour une interface interne de communication.

7. Véhicule selon la revendication 6,
**caractérisé en ce qu'**
un module interne d'interface de communication présente des fonctions de power-management interne, de synchronisation de certains signaux ainsi que de production et de distribution d'informations d'état et de données utiles.

8. Véhicule selon une des revendications 2 à 7,
**caractérisé en ce que**
le module (11) d'alimentation en courant auxiliaire, le module de réseau auxiliaire et/ou le module interne d'interface de communication ne peuvent être mis en service du côté entrée qu'avec des modules donneurs compatibles tels que le module (10) d'alimentation en courant principal, ou le module (12) d'interface de réseaux principal, les modules donneurs incompatibles étant mis en service sur des parties ou des places du système enfichable autres que les modules donneurs compatibles.

9. Véhicule selon une des revendications précédentes,
**caractérisé en ce que**
le système enfichable (15) établit une liaison à fiche facilement séparable entre des modules et des supports de module.

10. Véhicule selon une des revendications précédentes,
**caractérisé en ce que**
certains sous-systèmes, avec des fonctions définies, sont fixés ou peuvent être fixés dans le support d'un module (1).

11. Véhicule selon une des revendications précédentes,
**caractérisé en ce que**
le support de module (1) a la forme d'un caisson.

12. Véhicule selon une des revendications précédentes,
**caractérisé en ce que**
le support de module (1) comprend un châssis intégré à un boîtier (2) ayant extérieurement la forme d'un caisson.

13. Véhicule selon une des revendications précédentes,
**caractérisé en ce que**
le système enfichable (15), dans le support de module (1), est conçu de plus pour accueillir et faire fonctionner un module GPS (13).

14. Véhicule selon une des revendications précédentes,
**caractérisé en ce que**
le système enfichable (15), dans le support de module (1), est conçu de plus pour accueillir et faire fonctionner un module de tuner FM.
